# EUROPÄISCHE PATENTANMELDUNG

(11) **EP 3 095 409 A1**
(43) Veröffentlichungstag der Anmeldung: **23.11.2016**
(21) Anmeldenummer: 15172612.2
(22) Anmeldetag: 17.06.2015
(51) Int. Cl.: A61C 8/00

(54) **INSERTIONSSET FÜR EIN ENOSSALES EINZELZAHNIMPLANTAT**

(30) Priorität: 21.05.2015 DE 102015108098
(71) Anmelder: Epiphanostics GmbH, 83607 Holzkirchen (DE)
(72) Erfinder: Dürr, Walter, 75196 Remchingen (DE)
(74) Vertreter: Nobbe, Matthias

(57) **Zusammenfassung**

Die Erfindung betrifft ein Insertionsset für ein enossales Einzelzahnimplantat.

## Beschreibung

Die Erfindung betrifft ein Insertionsset für ein enossales Einzelzahnimplantat mit den Merkmalen des Patentanspruches 1 und Weiterbildungen davon.

Bei einem Einzelzahnimplantat, wie es aus der DE 40 28 855 C2 bekannt und auch Gegenstand der DE 195 09 762.9-32 ist, erfolgt die Verdrehsicherung in der Weise, dass die Grundkörper-Formschlusselemente am Boden der Ringausnehmung des Grundkörpers und die Distanzhülsen-Formschlusselemente, die hierzu komplementär sind, am zervikalen Stirnrand des Zentrierbundes der Distanzhülse vorgesehen sind. Fertigungstechnisch sind derartige Formschlusselemente nur verhältnismäßig schwierig herzustellen, wobei es ferner in manchen Anwendungsfällen nicht sonderlich günstig ist, dass nicht die volle Tiefe der Ringausnehmung bzw. des Zentrierbundes zum Zentrieren, Fixieren und Sichern der Distanzhülse relativ zum Grundkörper zur Verfügung steht.

Auch bei einem anderen Dentalimplantat, wie es aus der DE 37 35 378 vorgesehen ist, treten Schwierigkeiten ähnlicher Art auf, die darauf beruhen, dass auch dort die Formschlusselemente des Grundkörpers mit Abstand von dessen koronalen Stirnrand innerhalb einer Blindbohrung des Grundkörpers liegen.

Aus der DE 41 27 839 A1 ist ein Implantat-Grundkörper bekannt, dessen zentrale Ringausnehmung ein Formschlusselement aufweist, welches sich unmittelbar an den koronalen Stirnrand des Grundkörpers anschließt, wobei das Formschlusselement nutenförmig gestaltet ist und das in dem Grundkörper einzusetzende Halteteil eine dazu komplementäre Gestaltung aufweist. Ein gesonderter Implantatpfosten oder Halteschraube ist dabei nicht vorgesehen.

Aus der DE 195 34 979 C1 ist ein Einzelzahnimplantat bekannt, bei dem die Formschlusselemente des Grundkörpers unmittelbar im Anschluss an dessen koronalen Stirnrand mit entsprechender Anordnung und Ausbildung der hierzu komplementären Abutment-Formschlusselemente angeordnet sind. Dadurch, dass die gesamte Tiefe der Ringausnehmung des Grundkörpers für die Zentrierung und Führung des Abutments zur Verfügung steht, soll sich eine deutlich verbesserte Stabilität der Verbindung zwischen Distanzhülse und Grundkörper bei einem größeren Gestaltungsspielraum in der Art der Teilung sowie der Formgebung der Formschlusselemente ergeben.

Bei allen derartigen Zahnimplantaten wird die Implantation in der Regel so durchgeführt, dass zunächst der Knochen freigelegt wird, um den Knochen optimal für eine Implantation vorbereiten zu können, und dabei wird oft ein Zahnfleischlappen (Mucoperiost) präpariert. Bei guten Knochenverhältnissen und ausreichend breiter fixierbarer Gingiva kann ein Zahnimplantat auch ohne diese Freilegung / Aufklappung des Zahnfleisches mittels Zahnfleischausstanzung in einer transgingivalen Implantation gesetzt werden. Mit speziellen Bohrern wird dann das Implantatbett aufbereitet, wobei eine Bohrschablone verwendet werden kann, um die genaue Bohrrichtung für die optimale Position und Ausrichtung des Implantates zu gewährleisten. Das Implantat wird dann passgenau in den Kieferknochen eingeschraubt, wobei die so genannte Primärstabilität (erste mechanische Stabilität) einer der wichtigen Erfolgsfaktoren für die Osseointegration ist.

Dabei unterscheidet man beim Setzen der Implantate zwischen einer einphasigen, offenen Einheilung und einer zweiphasigen, geschlossenen Einheilung. Bei der zweiphasigen Vorgehensweise wird das Implantat (Grundkörper) auf Höhe des freigelegten Knochenniveaus gesetzt. Die Schleimhaut wird über dem oberen Ende des Grundkörpers, dem Implantatkopf, vernäht. Nach der Einheilung wird das Implantat in einem kleinen, zweiten Eingriff freigelegt, um mit der prothetischen Versorgung zu beginnen. Bei Implantationen, die mit Knochen aufbauenden Maßnahmen verbunden sind, bietet diese zweizeitige Vorgehensweise Schutz vor äußeren Einflüssen.

Bei der einphasigen Vorgehensweise heilen Implantate "offen" ein. Das bedeutet, dass ein Implantat nach dem Setzen während der Einheilung aus der Schleimhaut herausragen kann und in der Regel eine temporäre Zahnkrone oder einen Gingivaformer trägt. Der Implantatkopf kann dann oberhalb des Schleimhaut-Niveaus liegen, und ein Eingriff für die Freilegung des Implantates entfällt.

Beiden Vorgehensweisen ist gemeinsam, dass der Grundkörper in den Kieferknochen des Patienten zumeist durch Einschrauben in eine vom Implantologen gesetzte Bohrung eingebracht wird. Nach der Osseointegration wird in einer nächsten Stufe ein Abutment in den Grundkörper eingesetzt und mittels einer Halteschraube am Grundkörper fixiert. Auf dem Abutment wird in der Regel eine Krone befestigt. Die Phase der Osseointegration dauert je nach Patient oft bis zu mehreren Monaten, und dabei ist es für ein störungsfreies Einwachsen wichtig, dass der Grundkörper in der ersten Stufe der implantologischen Maßnahmen möglichst keimfrei an den Implantationsort gebracht und während der Implantation auch weiterhin so keimfrei gehalten wird. Hierzu können insbesondere während des Einbringens des Grundkörpers in den Kiefer und vor Verschluss des Grundkörpers besondere Maßnahmen zur Sterilisierung notwendig sein, um eine störungsfreie Osseointegration zu gewährleisten.

Die Aufgabe der Erfindung besteht daher darin, das Handling bei der Einbringung eines Zahnimplantats zu verbessern und so ein verbessertes System für die Einbringung bereitzustellen und dabei als Folge die Osseointegration zu verbessern. So kann das Infektionsrisiko vermindert und der Entwicklung einer pathologischen bakteriellen Desintegration vorgebeugt werden und infolgedessen der Einwachsvorgang, der sich nach Abschluss der Remodellingvorgänge bis zur Endfestigkeit des Implantates im Kiefer über einige Monate erstrecken kann, unterstützt werden.

Erfindungsgemäß wird diese Aufgabe bei einem gattungsgemäßen Insertionsset für ein enossales Einzelzahnimplantat durch die Kombination der Merkmale des Patentanspruches 1 gelöst. Besondere Ausführungsformen der Erfindung sind Gegenstand der Unteransprüche.

So betrifft die vorliegende Erfindung ein Insertionsset für ein enossales Einzelzahnimplantat für einen festsitzenden Zahnersatz, mit
- einem im Wesentlichen zylindrischen, in eine in einen Kieferknochen eingebrachte Bohrung einsetzbaren Grundkörper mit einer Ringausnehmung und mit einer koaxial zur Ringausnehmung angeordneten Bohrung, die apikal ein Gewinde zur Festlegung einer Halteschraube aufweist;
- einer in die Ringausnehmung des Grundkörpers einsetzbaren Eindrehbasis, die eine die Eindrehbasis koaxial zur Ringausnehmung durchdringende Bohrung zur Aufnahme einer Halteschraube aufweist;
- eine Halteschraube mit einem apikalen Außengewinde und einem koronalen Schraubenkopf, wobei die Halteschraube in die Bohrung der Eindrehbasis einsetzbar und in das Gewinde des Grundkörpers einschraubbar ist;
- einem Eindrehkopf, der mit der Eindrehbasis in Eingriff bringbar ist und der eine koaxial zur Ringausnehmung angeordnete Bohrung aufweist, und
- einem Halteschaft, der in die Bohrung des Eindrehkopfes einsetzbar einenends an der Halteschraube festlegbar ist und anderenends einen Ansatz für ein Winkelstück eines Dentalantriebs aufweist.

Bei Verwendung des erfindungsgemäßen Insertionssets kann bei einer zweiphasigen Einheilung so vorgegangen werden, daß in der ersten chirurgischen Phase nach Setzen des Implantates der Eindrehkopf und der Halteschaft entfernt werden und die Eindrehbasis mit einer beispielsweise gespritzten Verschlussschraube verschlossen wird.. Anschließend wird der Insertionsbereich mittels eines Schleimhautperiostlappens (= Mukogingivallappen) verschlossen. In der zweiten chirurgischen Phase wird die Schleimhaut über dem Implantat eröffnet (apikaler Verschiebelappen), und der Eindrehkopf kann verschraubt werden. Die Geometrie des Eindrehkopfes mit lateralen Flächen eignet sich auch als Scanbody.

Indikationsabhängig kann der Eindrehkopf unterhalb des Werkzeugansatzes auch abgetrennt und z.B. eine temporäre Krone oder eine Bisskappe zur Markierung der Implantatposition in einer Bissplatte angebracht werden. Alternativ kann nach Verschrauben des Eindrehkopfes eine Abdruckkappe aufgesetzt werden, um eine Abdrucknahme mit geschlossenem Löffel oder die Verschraubung eines Abdruckpfostens mit offenem Löffel zu ermöglichen.

Die Grundkörper-Einbringbasis/körper-Verbindung wird in jedem Fall erst dann eröffnet, nachdem eine ausreichende Implantat-Knochen-Verbindung sowie ein epitheliales Attachment und subepitheliales Bindegewebsattachment ausgebildet wurden.

Das erfindungsgemäße Insertionsset zeichnet sich dadurch aus, daß es eine Trennung zwischen Indexierung (Positionierung) und Kraftübertragungselementen zum Eindrehen des Grundkörpers ermöglicht, die im Stand der Technik nicht so gegeben ist, eine direkte Kraftübertragung vom Winkelstückkopf zum Eindrehkopf/Eindrehkörper (ein/zweiteilig) und von dort zu den Kraftübertragungselementen auf den Grundkörper ermöglicht, Indexierungselemente, beispielsweise in Form von Federstegen, nicht in Kontakt mit den Kraftübertragungselementen kommen und so für das spätere Einbringen des Abutments höchste Präzision gewährleistet ist. Dabei kann der Eindrehkopf/Eindrehkörper (ein/zweiteilig) auch als provisorisches Abutment nutzbar sein, und es ist eine exakte Abformung (3D-Position) mittels Intraoralscanners und damit Weiterverarbeitung der Daten mit CAD/CAM-Technologie möglich.

Die vorliegende Erfindung betrifft ebenso die Unterkombination des erfindungsgemäßen Insertionssets aus
- dem im Wesentlichen zylindrischen, in eine in einen Kieferknochen eingebrachte Bohrung einsetzbaren Grundkörper mit einer Ringausnehmung und mit einer koaxial zur Ringausnehmung angeordneten Bohrung, die apikal ein Gewinde zur Festlegung einer Halteschraube aufweist;
- der in die Ringausnehmung des Grundkörpers einsetzbaren Eindrehbasis, die eine die Eindrehbasis koaxial zur Ringausnehmung durchdringende Bohrung zur Aufnahme einer Halteschraube aufweist; und
- der Halteschraube mit einem apikalen Außengewinde und einem koronalen Schraubenkopf, wobei die Halteschraube in die Bohrung der Eindrehbasis einsetzbar und in das Gewinde des Grundkörpers einschraubbar ist;

Die Ringausnehmung des Grundkörpers kann einen apikalen Führungsabschnitt, einen Formschlussabschnitt und einen koronalen Endabschnitt umfassen, wobei die Eindrehbasis einen apikalen Führungsabschnitt, einen Formschlussabschnitt und einen koronalen Endabschnitt, die mit den Abschnitten des Grundkörpers formkomplementär korrespondieren, umfasst.

Vorteilhaft weisen der Formschlussabschnitt des Grundkörpers und der Formschlussabschnitt der Eindrehbasis zueinander formkomplementäre Eindrehelemente, die beim Einsetzen der Eindrehbasis in den Grundkörper miteinander in Eingriff gebracht werden, auf, wobei die Eindrehbasis und der Grundkörper in Eingriffsposition der zueinander formkomplementären Eindrehelemente zueinander drehfest festgelegt sind. Wenn erfindungsgemäß von Eindrehelementen als Formschlusselementen gesprochen wird, können diese je nach Ausgestaltung der Elemente auch einen Kraftschluss oder Form- und Kraftschluss bewirken. Der Vereinfachung halber wird im Rahmen der Erfindung von Formschluss gesprochen.

Zusätzlich kann die Eindrehbasis am koronalen Ende einen Formschlussabschnitt mit Eindrehelementen aufweisen, die mit Eindrehelementen des Eindrehkopfes miteinander in Eingriff gebracht werden können, wobei die Eindrehbasis und der Eindrehkopf in Eingriffsposition der zueinander formkomplementären Eindrehelemente zueinander drehfest festgelegt sind.

In einer Ausführungsform des erfindungsgemäßen Insertionssets für ein enossales Einzelzahnimplantat können die Eindrehbasis und der Eindrehkopf auch einstückig, zusammen Eindrehkörper genannt, ausgebildet sein. Ein erfindungsgemäßes Insertionsset mit einem solchen einteiligen Eindrehkörper kann vorteilhaft für eine einphasige Einheilung verwendet werden. Dies ermöglicht eine ungestörte Ausbildung des Knochen-Implantat-Verbundes, des subepithelialen Bindegewebsattachment und des epithelialen Attachments. Das sterile Einbringen der Innenkonfiguration sichert Sterilität während des Einheilvorganges. Eine Kürzung des Eindrehkörpers, bzw. des Eindrehkopfes unterhalb des koronalen Endes und ein Verschluss der Bohrung im Eindrehelement mit einer Gingivakappe ist dabei möglich, so daß eine Anpassung an die jeweiligen Kieferverhältnisse oder die Anforderungen des Implantologen möglich ist.

Bei einer zweistückigen Ausführung von Eindrehbasis und Eindrehkopf ist zur Festlegung der Eindrehbasis und des Grundkörpers zueinander oder bei einer einstückigen Ausführung von Eindrehbasis und Eindrehkopf, gemeinsam Eindrehkörper genannt, zur Festlegung von diesem Eindrehkörper und des Grundkörpers zueinander erfindungsgemäß eine Halteschraube mit einem apikalen Außengewinde und einem koronalen Schraubenkopf vorgesehen, wobei die Halteschraube in die Bohrung der Eindrehbasis oder des Eindrehkörpers einsetzbar und mit dem apikalen Außengewinde in das Gewinde des Grundkörpers einschraubbar ist. Dabei kann die Halteschraube mit dem apikalen Ende des Schraubenkopfes, das ringförmig oder konisch ausgebildet sein kann, auf dem ringförmigen oder konischen Innenrand der Bohrung der Eindrehbasis oder des Eindrehkörpers zur Anlage kommen und diese drehfest festlegen.

Zur Festlegung des Halteschaftes oder einer weiteren Halteschraube, die zur Festlegung des Eindrehkopfes auf der Eindrehbasis angeordnet sein kann, kann der Schraubenkopf der Halteschraube, mit der die Eindrehbasis oder der Eindrehkörper gegenüber dem Grundkörper festgelegt werden kann, einen Innenmehrkant und bevorzugt ein im Innenmehrkant angeordnetes Innengewinde aufweisen, in das der Halteschaft oder die weitere Halteschraube eingeschraubt werden kann.

Um bei einer zweistückigen Ausführung von Eindrehbasis und Eindrehkopf eine ebene Stirnfläche für den Ansatz des Eindrehkopfes auszubilden, kann der Schraubenkopf der Halteschraube in der Gebrauchsposition in der Eindrehbasis versenkt sein. Dabei kann zwischen Schraubenkopf und Eindrehbasis eine Ringnut ausgebildet sein, die einen Abschnitt des Eindrehkopfes zur Zentrierung und Führung aufnehmen kann.

Erfindungsgemäß können je nach Ausführung von Eindrehbasis und Eindrehkopf die Halteschraube und der Halteschaft einstückig ausgebildet sein. Ebenso kann der Halteschaft zweistückig ausgebildet sein, insbesondere in Form der weiteren o.a. Halteschraube, die zur Festlegung des Eindrehkopfes auf der Eindrehbasis angeordnet sein kann, und eines verkürzten Halteschaftes, was insbesondere bei räumlich beengten Kieferverhältnissen vorteilhaft sein kann.

Bei Verwendung des erfindungsgemäßen Insertionssets für ein enossales Einzelzahnimplantat für einen festsitzenden Zahnersatz ist der Halteschaft vorteilhaft so ausgebildet, dass er in Gebrauchsposition Grundkörper, Eindrehbasis und Eindrehkopf, insbesondere die zueinander korrespondierenden Eindrehelemente, in Eingriff hält.

Als zueinander korrespondierende Eindrehelemente sind erfindungsgemäß jeweils paarweise an Grundkörper und Eindrehbasis apikal sowie an Eindrehbasis koronal und Eindrehkopf formkomplementäre Paare von Innenkant-Außenkant, erfindungsgemäß auch Innenkantfläche-Außenkantfläche oder Innenfläche-Außenfläche bezeichnet, ausgebildet, die nach Art eines Drei-, Vier-, Fünf- oder Sechskantes, oder Mehrkantes, den Form/Kraftschluss ermöglichen und somit die Übertragung des Drehmomentes vom Werkzeug - hand- oder motorbetrieben - auf den Grundkörper sicherstellen. Alternativ können die zueinander korrespondierenden Eindrehelemente auch als formkomplementäre Paare von Nocken und Ausbuchtungen, oder als formkomplementäre Paare von Morsekegel und Morsekonus ausgebildet sein, wobei auch unterschiedliche formkomplementäre Eindrehelementpaare im erfindungsgemäßen Insertionsset verwendet werden können. So können an Grundkörper und Eindrehbasis apikal Innenkant-Außenkant-Paare und an Eindrehbasis koronal und Eindrehkopf ein Morsekegel-Morsekonus-Paar vorgesehen sein.

Die Eindrehelemente können jeweils besonders in Form von zwei oder mehr, bevorzugt drei, umfangsmäßig gleichmäßig beabstandet angeordneten "koaxialen" Planflächen (Innenmehrkant) in der Ringausnehmung am Grundkörper und in Form von zwei oder mehr, bevorzugt drei, umfangsmäßig gleichmäßig beabstandet angeordneten "koaxialen" Planflächen (Außenmehrkant als Zwei-, Drei-, Vier- oder Mehrkantkopf) an der Eindrehbasis ausgebildet sein.

Zwischen je zwei Eindrehelementen wie den Innenkant-Flächen oder Nocken (als Form- und/oder Kraftschlusselemente) ist umfangsmäßig jeweils ein Übergangsbereich vorgesehen sein, der in Form eines radial nach innen gerichteten Steges oder Vorsprunges (im Mittenbereich) ausgebildet sein kann. Dabei weist ein solcher Steg/Vorsprung eine radial nach innen gerichtete Spitze, die auch als Fläche ausgebildet sein kann, mit Stegseitenflächen auf, die zu den Eindrehelementen beidseits benachbart sind, bzw. in diese übergehen. Ein als Außenkantfläche ausgebildetes Eindrehelement kann so ausgebildet sein, daß die Planfläche der Außenkantfläche zumindest in Eindrehrichtung mit einem seitlichen Vorsprung versehen ist, der beim Eindrehen des Grundkörpers in den Kiefer an der korrespondierenden Stegseitenfläche, nicht jedoch an der Stegspitze zur Anlage kommt und zusätzlich die Übertragung des Drehmomentes vom Eindrehwerkzeug auf den Grundkörper unterstützt und gleichzeitig das toleranzbedingte Spiel zwischen den Eindrehelementen verringert. Dabei soll insbesondere bei den Stegen am Grundkörper Kontakt zu dem Spitzen/Mittenbereich des Steges vermieden werden, um eine Beschädigung des Spitzen/Mittenbereiches des Steges zu vermeiden. Die Position der Stege, bzw. der korrespondierenden Ausnehmungen für die Stege, die radial nach innen in der Bohrung vom Grundkörper angeordnet sind, kann nach außen über Markierungen am Grundkörper, der Eindrehbasis und dem Eindrehkopf sichtbar gemacht werden. Als solche Markierungen können auch Planflächen des Scanbodies dienen, der die digitale Erfassung der Implantat- bzw. Laborimplantatposition relativ zur Restbezahnung und zum Weichgewebe erlaubt.

Ein Einzelzahnimplantat, das unter Verwendung des erfindungsgemäßen Insertionssets zum Eindrehen des Grundkörpers und nach anschließendem Einsetzen eines Abutments in dem Kieferknochen angeordnet werden kann, umfasst somit einen Grundkörper, ein in den Grundkörper einsetzbares Abutment sowie eine den Grundkörper und das Abutment durchdringende Halteschraube, die die Position des Abutments gegenüber dem Grundkörper festlegt und in einen am apikalen Ende des Grundkörpers vorgesehenen Gewindeabschnitt einschraubbar ist.

Der Grundkörper weist wie beschrieben eine Ringausnehmung auf, in die nach Einheilung des Grundkörpers im Kiefer und nach Entfernen der Halteschraube und der Eindrehbasis das Abutment einsetzbar ist. Die Ringausnehmung kann dabei einen Führungsabschnitt am apikalen Ende der Ringausnehmung, einen Formschlussabschnitt und einen koronalen Endabschnitt umfassen, an die entsprechende Abschnitte des Abutments - und der Eindrehbasis - komplementär angepasst sind. Der koronale Endabschnitt im Grundkörper ist vorzugsweise zylindrisch ausgebildet, an den der entsprechende Abschnitt im Abutment angepasst ist. In den Formschlussabschnitten sind zu den Eindrehelementen unterschiedliche Formschlusselemente wie Stege, Nocken und Aussparungen/Nuten angeordnet, die die relative Bewegung von Abutment und Grundkörper in Umfangsrichtung verhindern. Dabei ist die Ausführung des Grundkörpers mit axialen Stegen/Nocken, die in axiale Aussparungen/Nuten am Abutment eingreifen, bevorzugt.

Die Führungsabschnitte am Grundkörper und Abutment sind zueinander jeweils nach Art einer Spielpassung ausgebildet. So wird eine zuverlässige Führung der Eindrehbasis bzw. Abutments im Grundkörper ermöglicht. Dabei können für den Fall, dass Führungsabschnitt und Formschlussabschnitt als zwei distinkte Abschnitte ausgebildet sind, beim Einschieben der Eindrehbasis bzw. Abutments die jeweiligen Führungsabschnitte an Grundkörper/Eindrehbasis oder an Grundkörper/Abutment in Eingriff kommen, bevor der Formschlussabschnitt in Eingriff gebracht wird.

Bei einer solchen Spielpassung ist das radiale Höchstmaß des Führungsabschnittes der Eindrehbasis bzw. Abutments kleiner als das radiale Mindestmaß des Führungsabschnittes des Grundkörpers. Dabei sind die Toleranzfelder so gewählt, dass das Spiel, also der maximale radiale Abstand zwischen Mindestmaß des Führungsabschnittes der Eindrehbasis bzw. Abutments und Höchstmaß des Führungsabschnittes des Grundkörpers, einen für Einschubwiderstand und Führung vertretbaren Wert erhält.

Nach Eindrehen des Grundkörpers in den Kiefer und Entfernen der Eindrehbasis ist ein Abutment umfangsmäßig ausrichtbar in den Grundkörper einsetzbar, wobei Formschlusselemente wie Federstege/Nocken an Grundkörper und Aussparungen/Nuten an Abutment miteinander in Eingriff gebracht werden können und dabei Grundkörper und Abutment rotationsgesichert zueinander festlegen. Anschließend werden Grundkörper und Abutment über eine Halteschraube in der zueinander festgelegten Position fixiert.

Der Formschlussabschnitt des Grundkörpers und der Formschlussabschnitt des Abutments sind in der Form so aufeinander abgestimmt, dass das Abutment in die Ausnehmung des Grundkörpers so eingesetzt werden kann, dass die jeweiligen Stege und Aussparungen/Nuten miteinander in Eingriff gebracht werden können und so eine Bewegung in Umfangsrichtung verhindern. Die jeweiligen Formschlussabschnitte können als hohlzylindrische Bereiche der Ringausnehmung, auch mit Abschnitten mit unterschiedlichen Durchmessern, im Grundkörper und dazu jeweils korrespondierendem außenzylindrischem Abschnitt oder Abschnitten des Abutments gestaltet sein.

Die erfindungsgemäße Ausgestaltung des enossalen Einzelzahnimplantates läßt die Verwendung von verschiedenen Materialien und Materialkombination zu, die aus der Gruppe der Metalle, der metallischen Legierungen, keramischen Materialien und Kombinationen davon ausgewählt werden können.

Dabei kann der Grundkörper bevorzugt aus einem Material, das aus dieser Gruppe der Metalle, der metallischen Legierungen, keramischen Materialien und Kombinationen davon ausgewählt wird. Bevorzugt besteht das eingesetzte Implantatmaterial und Insertionsset insgesamt aus metallischen Materialien wie Reintitan oder metallischen Titanlegierungen, Chrom/Nickel/Aluminium/Vanadium/ Kobalt-Legierungen (z.B. TiAlV4, TiAlFe2,5), Edelstählen (z.B. V2A, V4A, Chrom-Nickel 316L), keramischen Materialien wie Hydroxylapatit, Aluminiumoxid, Zirkondioxid oder aus einer Kombination davon, bei der das metallische Material als Verbundmaterial mit keramischem Material vorliegt.

Die folgende detailliertere Beschreibung der Elemente der Erfindung gilt insoweit jeweils für alle Ausführungsformen der Erfindung, sofern nicht Gegenteiliges festgehalten ist.

Erfindungsgemäß erlaubt der axial apikal zum Formschlußabschnitt vorgesehene und bevorzugt zylindrisch ausgeführte Führungsabschnitt eine zuverlässige und stabile Fixierung der Eindrehbasis oder später des Abutments im Grundkörper durch die Halteschraube, da die jeweiligen Bauteile über Führungsabschnitt mit einer Spielpassung nach Art einer Rohr-in-Rohr-Lagerung gelagert sind. Die radialen Innendurchmesser von Führungsabschnitt im Grundkörper und der Außendurchmesser im Abutment sind so gewählt, dass die Wandstärke im Grundkörper ausreichend ist, um bei lateraler oder winkliger Belastung des Implantates während des Kauvorganges Verformungen der Grundkörperwände zu vermeiden.

Erfindungsgemäß sind die zueinander komplementären Formschlusselemente an Grundkörper und Eindrehbasis jeweils in Form einer Vaterteil-Mutterteil-Verbindung ausgebildet, wobei das/die Vaterteil(e) bevorzugt an dem Grundkörper angeordnet ist/sind. Aufgrund der so gewählten Anordnung ist infolge der Vermeidung einer Verringerung der Wandstärke des Grundkörpers auch bei keramischen Werkstoffen eine präzise Kraftübertragung möglich, die die Verwendung von voll- oder teilkeramischem Grundkörper neben den bekannten Metallen und legierten Materialien, ermöglicht.

Erfindungsgemäß kann das Vaterteil-Formschlusselement jeweils die Form eines sich parallel zur Längsachse des Grundkörpers erstreckenden Federsteges haben, der in jeweils ein korrespondierendes Mutterteil am anderen Bauteil verdrehgesichert eingreift. Die Formschlusselemente können durch mechanische Bearbeitung wie Fräsen, Bohren etc. aus den Bauteilen Grundkörper und Abutment herausgearbeitet werden.

Der Formschlussabschnitt kann zylindrisch ausgebildet sein. Bei einer zylindrischen Ausbildung ist der Formschlussabschnitt an der Eindrehbasis oder Abutment in der Form eines zylindrischen Abschnittes ausgebildet, der mit seinem Außendurchmesser der hohlzylindrischen Bohrung am Grundkörper in der Länge und dem Durchmesser angepasst ist.

Der Federsteg kann erfindungsgemäß vorteilhaft in Form einer gefrästen Nase, Steges oder eines jeweils in einer Blindbohrung (Haltebohrung) gehaltenen Stiftes ausgebildet sein. Der Stift kann einen, bevorzugt kreisförmigen, oder regelmäßig- oder unregelmäßig-polygonalen Querschnitt haben, von dem ein Querschnittssegment aus der Nut in der konischen Wandung radial zur Richtung der Längsmittelachse, je nach relativer Lage von Vater- bzw. Mutterteil, des Grundkörpers hervorsteht und bis über die maximale axiale Länge des Formschlussabschnittes den Federsteg ausbilden kann. In der einfachsten Form kann ein Stift eine zylindrische Form haben und beispielsweise in einer Drahtziehmaschine hergestellt sein.

Für den Implantatpfosten/Halteschraube ist in der Blindbohrung apikal von dem konischen Formschluss- und Zentrierabschnitt des Grundkörpers ein Innengewinde vorgesehen, wobei die Halteschraube das Abutment auch vollständig durchsetzt.

Es ist auch ein Aspekt der vorliegenden Erfindung, dass - neben einer vereinfachten mechanischen Bearbeitung der Bauteile und dem vereinfachten Handling - die Bedingungen während der einphasigen oder zweiphasigen Implantation besonders in der Einheilphase möglichst keimfrei im Grundkörper gehalten werden können und so auch eine ausgewogene mechanische Stabilität bei der Einbringung des Implantates in den Kiefer und dessen Gebrauch beim Kauvorgang erzielt werden kann, was bei den im Stand der Technik bekannten Systemen so nicht gegeben ist.

Zur Bereitstellung des erfindungsgemäßen Insertionssets kann die Eindrehbasis oder der Eindrehkörper in die Ringausnehmung des Grundkörpers eingesetzt werden, und dabei werden die formkomplementären Eindrehelemente von Grundkörper und Eindrehbasis (apikal) oder Eindrehkörper miteinander in Eingriff gebracht. Mittels der (apikalen) Halteschraube kann die Eindrehbasis im Grundkörper fixiert werden.

Bei der zweiteiligen Form von Eindrehbasis und Eindrehkopf wird der Eindrehkopf auf die Eindrehbasis aufgesetzt und die formkomplementären Eindrehelemente an Eindrehbasis (koronal) / Eindrehkopf im jeweiligen Formschlussabschnitt miteinander in Eingriff gebracht. Der Eindrehkopf kann dann mittels des Halteschaftes oder mittels einer zweiten Halteschraube und Halteschaft an der ersten (apikalen) Halteschraube drehfest festgelegt werden.

Bei der einteiligen Form von Eindrehbasis und Eindrehkopf wird der Eindrehkörper auf den Grundkörper aufgesetzt und dabei die formkomplementären Eindrehelemente an Grundkörper und Eindrehkörper im jeweiligen Formschlussabschnitt miteinander in Eingriff gebracht. Der Eindrehkörper kann dann über die (apikale) Halteschraube und Halteschaft oder, je nach Ausführung, über eine zweite Halteschraube und Halteschaft drehfest an der ersten Halteschraube festgelegt werden.

Nach Festlegen des Halteschaftes kann, bei der einteiligen und zweiteiligen Form von Eindrehbasis und Eindrehkopf, das erfindungsgemäße Insertionsset sterilisiert werden, vorteilhaft mittels γ-Sterilisierung, und in einer Sterilverpackung für die Verwendung aufbewahrt werden.

Zur Verwendung entnimmt der Implantologe das Insertionsset der Sterilverpackung und setzt eine Mehrkantnuss auf den Halteschaft auf, die den Mehrkant am koronalen Ende von Eindrehkopf oder Eindrehkörper umfasst und setzt den Halteschaft (mit Mehrkantnuss) dann so in das Eindrehwerkzeug ein, daß das am koronalen Ende des Halteschaftes vorhandene Sicherungselement, wie eine umlaufende Ringnut, in eine Halterung am Eindrehwerkzeug und gleichzeitig die Mehrkantnuss in das Kraftübertragungselement am Eindrehwerkzeug eingreifen kann. Der Implantologe kann dabei unter Berücksichtigung der Bedingungen im Kiefer des Patienten dann entscheiden, ob er ein einphasiges oder zweiphasiges Implantationsverfahren wählt und danach die Art des Insertionssets mit einteiligen Eindrehkörper oder mit zweiteiliger Variante mit Eindrehbasis und Eindrehkopf bestimmen. In jedem Fall wird gewährleistet, daß der Implantologe ein geschlossenes steriles System von Grundkörper und Eindrehbasis/Eindrehkörper in den Kiefer des Patienten einbringen kann und so optimale Voraussetzungen für ein Einwachsen des Implantates in den Kiefer schafft.

Nachstehend sind Ausführungsbeispiele des erfindungsgemäßen Insertionssets und seiner Bauteile anhand der schematischen Zeichnungen im Einzelnen erläutert. Dabei zeigen:
Fig. 1A ein Ausführungsbeispiel eines erfindungsgemäßen Insertionssets im axialen Längsschnitt entlang der in der Draufsicht jeweils rechts gezeigten Ebene in der Gebrauchsposition;
Fig. 1B ein weiteres Ausführungsbeispiel eines erfindungsgemäßen Insertionssets im axialen Längsschnitt entlang der in der Draufsicht jeweils rechts gezeigten Ebene in der Gebrauchsposition;
Fig. 1C ein weiteres Ausführungsbeispiel eines erfindungsgemäßen Insertionssets im axialen Längsschnitt entlang der in der Draufsicht jeweils rechts gezeigten Ebene in der Gebrauchsposition;
Fig. 2 ein Ausführungsbeispiel eines im erfindungsgemäßen Insertionsset wie in

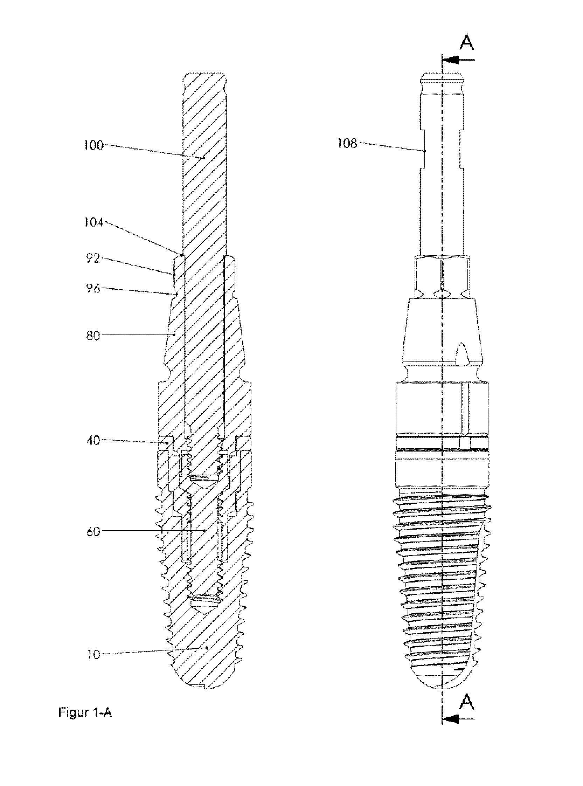

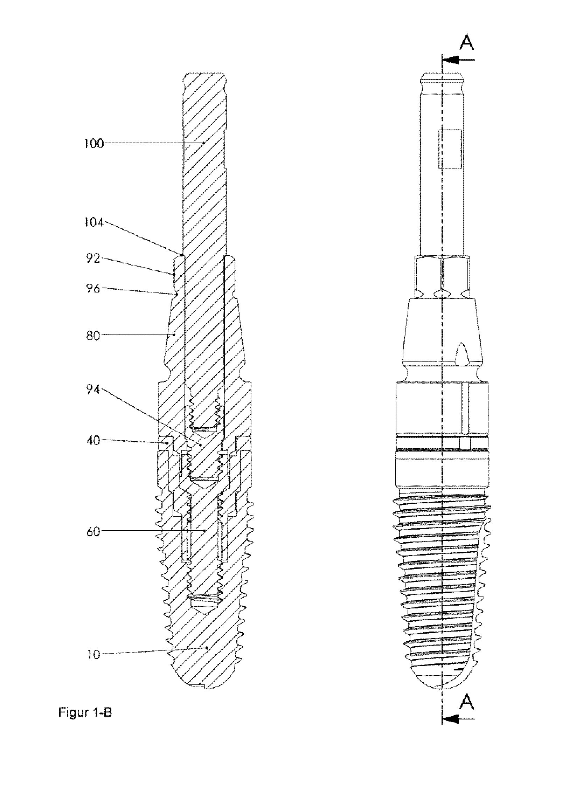

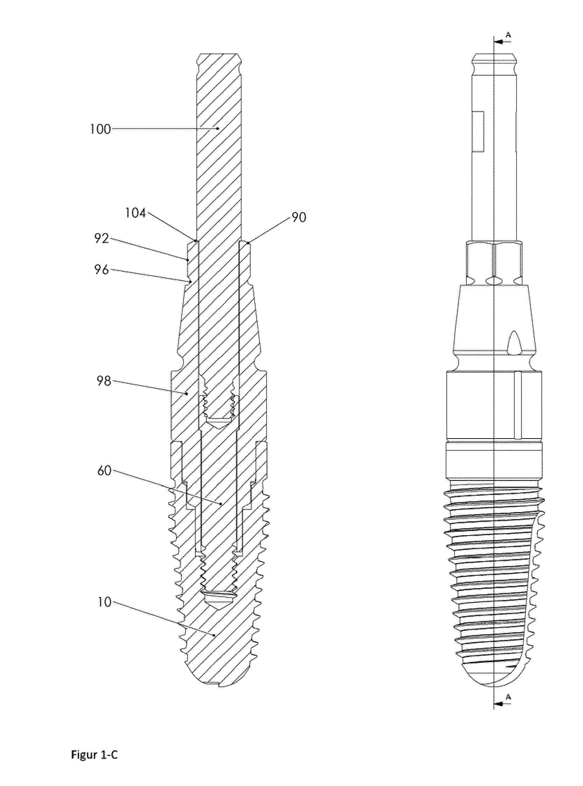

Fig. 1A, 1B oder 1C gezeigt verwendeten Implantat-Grundkörpers im axialen Längsschnitt entlang der in der Draufsicht jeweils rechts gezeigten Ebene, sowie jeweils eine Draufsicht von unten oberhalb und von oben unterhalb auf den Grundkörper;

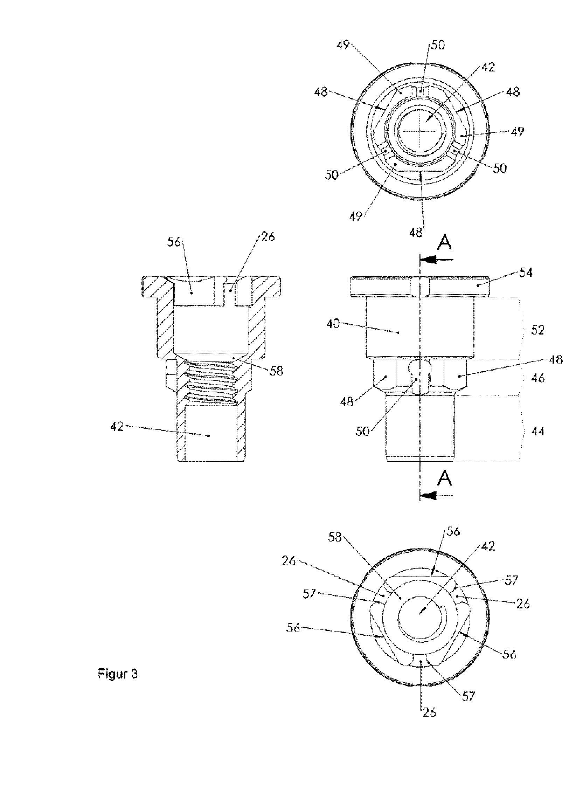

Fig. 3 ein Ausführungsbeispiel einer im erfindungsgemäßen Insertionsset verwendeten und wie in Fig. 1-A oder 1-B gezeigten Eindrehbasis im axialen Längsschnitt entlang der in der Draufsicht rechts gezeigten Ebene, sowie jeweils eine Draufsicht von unten oberhalb und von oben unterhalb auf die Eindrehbasis;

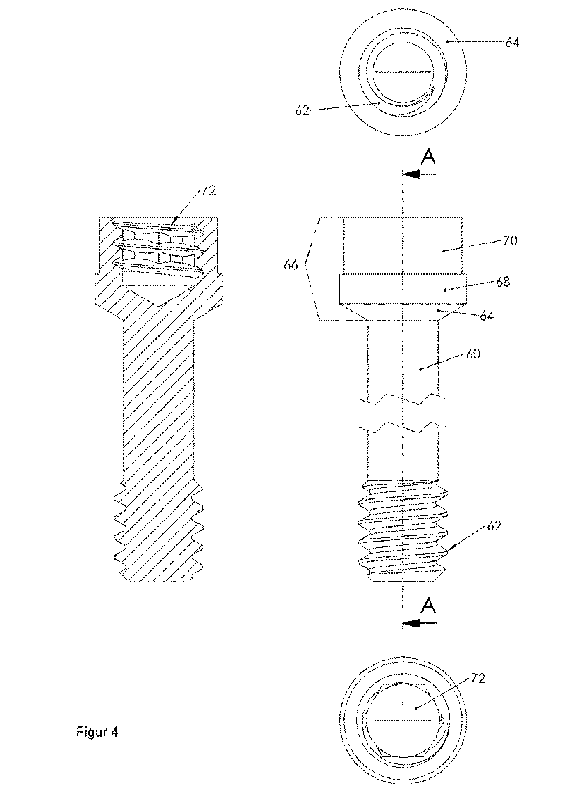

Fig. 4 ein Ausführungsbeispiel einer im erfindungsgemäßen Insertionsset wie in Fig. 1 gezeigt verwendeten Halteschraube - zur Festlegung der Eindrehbasis in dem Grundkörper - im axialen Längsschnitt entlang der in der Draufsicht rechts gezeigten Ebene, sowie jeweils eine Draufsicht von unten oberhalb und von oben unterhalb auf die Halteschraube;

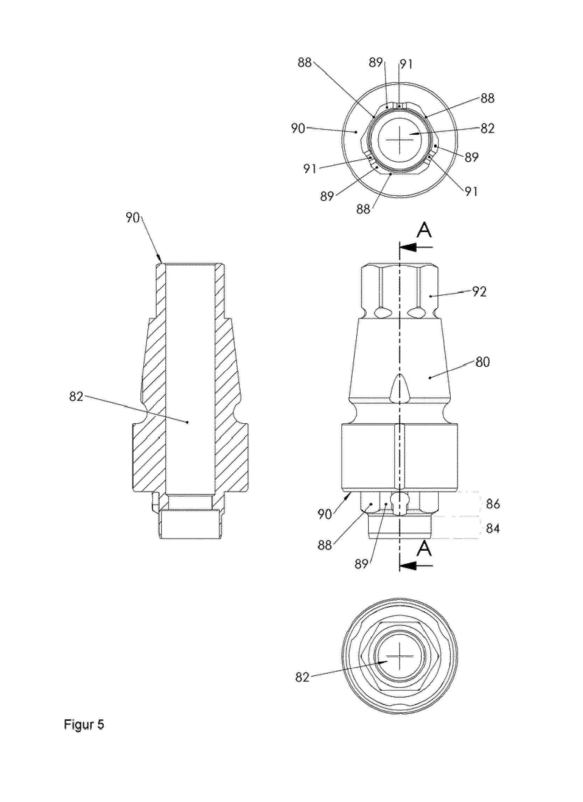

Fig. 5 ein Ausführungsbeispiel eines im erfindungsgemäßen Insertionsset wie in Fig. 1 gezeigt verwendeten Eindrehkopfes im axialen Längsschnitt entlang der in der Draufsicht rechts gezeigten Ebene, sowie jeweils eine Draufsicht von unten oberhalb und von oben unterhalb auf den Eindrehkopf;

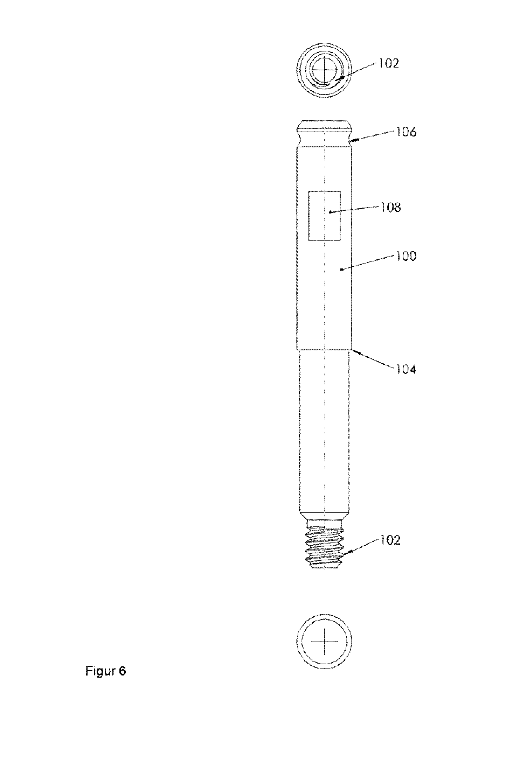

Fig. 6 ein Ausführungsbeispiel eines im erfindungsgemäßen Insertionsset wie in Fig. 1 gezeigt verwendeten Halteschaftes in der Draufsicht, sowie jeweils eine Draufsicht von unten oberhalb und von oben unterhalb auf den Halteschaft;

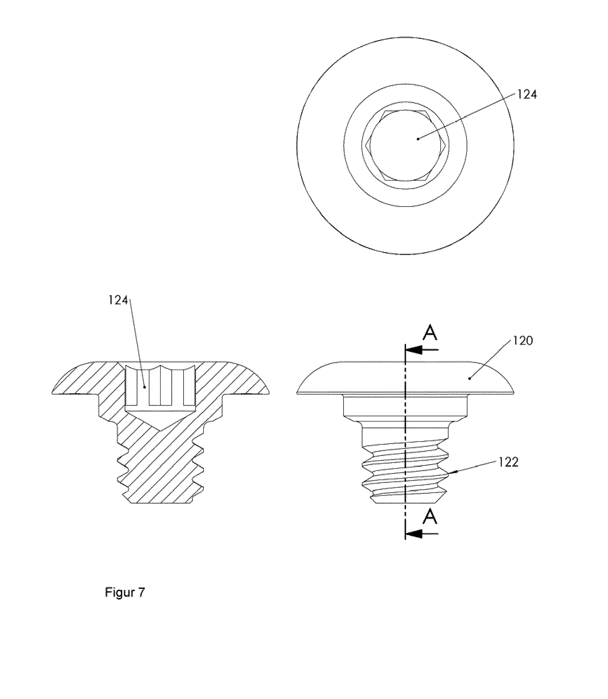

Fig. 7 ein Ausführungsbeispiel einer Verschlussschraube zum Verschluss der Eindrehbasis und der Halteschraube im axialen Längsschnitt entlang der in der Draufsicht rechts gezeigten Ebene, sowie eine Draufsicht von oben auf die Verschlussschraube;

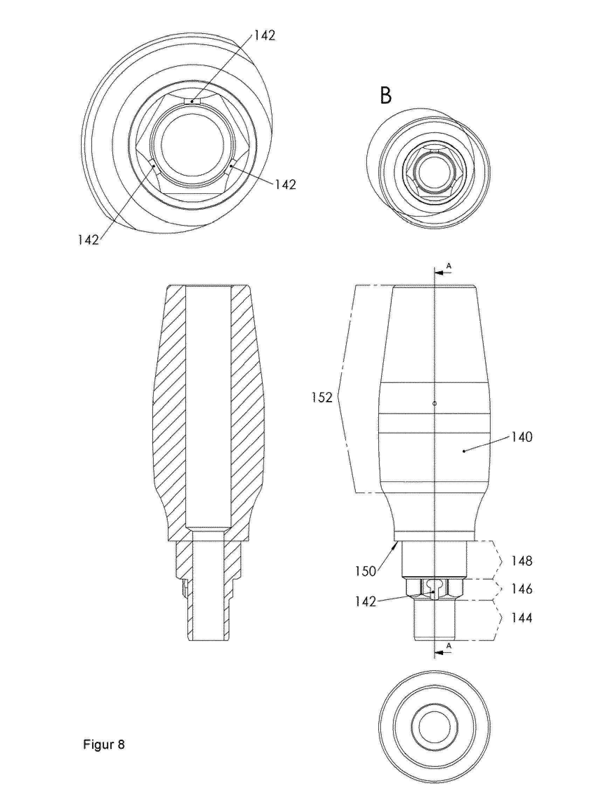

Fig. 8 ein Ausführungsbeispiel eines mit dem Grundkörper gemäß dem erfindungsgemäßen Insertionsset wie in Fig. 1 gezeigt verwendbaren Abutment im axialen Längsschnitt entlang der in der Draufsicht jeweils rechts gezeigten Ebene, sowie jeweils eine Draufsicht von unten oberhalb und von oben unterhalb auf das Abutment im axialen Längsschnitt entlang der in der Draufsicht jeweils rechts gezeigten Ebene

Wie in Figur 1a im Längsschnitt schematisch gezeigt, umfasst das erfindungsgemäße Insertionsset in einer Ausführung den Grundkörper 10, die Eindrehbasis 40 mit darin festgelegter Halteschraube 60, den auf der Eindrehbasis aufsitzenden Eindrehkopf 80 sowie den einteiligen Halteschaft 100, der den Eindrehkopf 80 durchdringt und in der Halteschraube 60 in der Eindrehbasis 40 festgelegt ist.

Bei der in Figur 1a gezeigten Ausführungsform des erfindungsgemäßen Insertionssets wird über den Halteschaft 100 und das nicht in der Zeichnung dargestellte Werkzeug, beispielweise eine Mehrkantnuss, die auf den Halteschaft 100 aufgesteckt ist und den Außenmehrkant 92 formschlüssig umgreift, umfasst das Drehmoment vom Winkelstück auf den Grundkörper übertragen. Dazu ist der Halteschaft 100 an seinem apikalen Ende mit einem Gewinde versehen, das in die Halteschraube 60 einschraubbar ist oder durch einen Bajonettverschluss dort festlegbar ist. Der Halteschaft 100 ist beispielhaft so ausgestaltet, dass mittels eines im Mittelabschnitt des Halteschaftes 100 vorgesehenen, gegebenenfalls konischen, Bundkragens 104, der am Endabschnitt des Eindrehkopfes 80 mit dem Außenmehrkant 92 koronal anliegt, der Eindrehkopf 80 gegen die Eindrehbasis 40 gehalten wird und mit der Eindrehbasis 40 apikal im Bereich der Stirnflache 90 eine Formschluss- und/oder Kraftschlussverbindung ausbildet. Die Eindrehbasis 40 selbst ist über die Halteschraube 60 im Grundkörper 10 festgelegt und durch die im Formschlussbereich des Grundkörper-Eindrehbasis-Paares angeordneten Eindrehelemente gegen ein umfangsmäßiges Verdrehen gesichert. Die einzelnen Bauteile des erfindungsgemäßen Insertionssets werden weiter unten im Detail beschrieben.

Das erfindungsgemäße Insertionsset erlaubt dem Implantologen, das aus der Verpackung entnommene und auf dem Winkelstück fixierte Insertionsset in die Bohrung im Kiefer des Patienten einzudrehen und je nach Bedingungen am Implantationsort die Vorbereitungen für die einphasige oder zweiphasige Einheilung in die Wege zu leiten. Dabei wird über das Winkelstück ein Drehmoment über den Halteschaft 100 und den Mehrkant 92 auf den Grundkörper übertragen und ermöglicht ein einfaches Eindrehen des Grundkörpers in den Kiefer, ohne dass dazu weitere Montagen erforderlich sind. Nach Ende des Eindrehvorganges des Grundkörpers in den Kiefer kann der Halteschaft 100, falls erforderlich, aus dem Gewinde der Halteschaube 60 herausgedreht werden. Dazu kann am Halteschaft ein Ansatz 108 für ein Werkzeug wie ein Maulschlüssel vorgesehen sein. Der Eindrehkopf 80 kann über Klemm- oder Schraubelemente an der Eindrehbasis 40 oder über eine weitere Halteschraube 94 wie in Figur 1b gezeigt an der Halteschraube 60 fixiert sein und je nach Entscheidung des Implantologen zur einphasigen oder zweiphasigen Einheilung von der Eindrehbasis entfernt werden.

Wenn der Implantologe sich zu einer einphasigen Einheilung entschließt, kann der Eindrehkopf 80 auf der Eindrehbasis 40 verbleiben und kann selbst als Halterung für einen temporären Zahnersatz, als eine Art temporäres Abutment, oder als Scanbody dienen. Dabei kann für die Verwendung als provisorisches Abutment der am koronalen Ende des Eindrehkopfes angeordnete Mehrkant 92, beispielweise ein Sechskant, an der Ringnut 96 unterhalb des Mehrkantes 92 nach Entfernen des Halteschaftes 100 abgetrennt werden und der verbleibende untere Teil des Eindrehkopfes 80 zur Fixierung eines solchen temporären Zahnersatzes genutzt werden. Der Eindrehkopf 80 kann vorteilhaft mit der Eindrehbasis 40 eine Formschluss- und/oder Kraftschlussverbindung ausbilden. Dabei kann diese Formschlussverbindung auch so ausgestaltet sein, dass der Eindrehkopf 80 über die Formschlusselemente auf der Eindrehbasis 40 verklemmt wird oder über die weitere Halteschraube 94 festgelegt sein kann.

Wie ausgeführt, kann die Eindrehbasis 40 im Grundkörper über die Halteschraube 60 festgelegt sein. Dabei ist die Halteschraube mit einem apikalen Gewinde 62, einem Mittelabschnitt und einem Schraubenkopf 66 versehen. Im Schraubenkopf 66 kann eine Fixierung für den Halteschaft 100 oder für eine zweite Halteschraube 94 nach Art eines Innengewindes vorgesehen sein, in das der Halteschaft 100 über das in seinem apikalen Ende vorgesehene Gewinde 102 oder die zweite Halteschraube 94, wie in Fig 1b gezeigt, eingeschraubt werden kann. Die Halteschraube 94 erlaubt die Verwendung eines kürzeren Halteschaftes 100, falls die Kieferverhältnisse dies erfordern. Alternativ zu einer Gewindeverbindung zwischen der Halteschraube 60 und dem Halteschaft 100 kann auch eine - nicht dargestellte - Rastverbindung nach Art einer Bajonettverbindung vorgesehen sein, die bei Einführen des Halteschaftes 100 in den Schraubenkopf einrastet und den Halteschaft 100 über die Halteschraube 60 an der Eindrehbasis 40 fixiert. Es kann auch eine - nicht dargestellte - Formschlussverbindung zwischen Halteschaft 100 und Eindrehkopf 80 über eine Mehrkantverbindung realisiert sein, bei der die Bohrung im Eindrehkopf zumindest in einem Teilabschnitt nach Art eines Innenmehrkants ausgeführt ist, an den ein entsprechender Teilabschnitt des Halteschaftes 100 nach Art eines Außenmehrkantes angepasst ist. Der Außenmehrkantabschnitt des Halteschaftes, beispielsweise in Form eines Sechskants, kann sich nahezu bis zum apikalen Ende des Halteschaftes erstrecken, wobei am apikalen Ende des Halteschaftes eine Ringnut vorgesehen ist, in der ein O-Ring gelagert sein kann, der in einer entsprechenden Ringnut im Schraubenkopf 66 der Halteschraube 60 eingreift und so eine Art Rastverbindung ausbilden kann.

Figuren 1B und 1C zeigen weitere Ausführungsformen eines erfindungsgemäßen Insertionsets. Dabei zeigt Figur 1B, wie ebenfalls in Figur 1A im Längsschnitt schematisch gezeigt, das erfindungsgemäße Insertionsset in einer Ausführung mit Grundkörper 10, der Eindrehbasis 40 mit darin festgelegter Halteschraube 60, den auf der Eindrehbasis aufsitzenden Eindrehkopf 80 mit darin festgelegter zweiter Halteschraube 94 sowie den einteiligen Halteschaft 100, der den Eindrehkopf 80 durchdringt und in der Halteschraube 94 in der Eindrehbasis 40 festgelegt ist.

Figur 1C zeigt, ähnlich Figur 1A im Längsschnitt, schematisch eine weitere Ausführungsform des erfindungsgemäßen Insertionssets in einer Ausführung mit Grundkörper 10 und mit einem einteiligen Eindrehkörper 98 (aus Eindrehbasis 40 und Eindrehkopf 80) mit darin festgelegter Halteschraube 60, sowie den einteiligen Halteschaft 100, der den Eindrehkörper 98 durchdringt und in der Halteschraube 60 festgelegt ist. In einer nicht dargestellten Variante dieser Ausführungsform kann der Halteschaft 100 auch in einer zweiten Halteschraube 94 festgelegt sein.

Grundsätzlich ist es bei Verwendung einer zweiten Halteschraube von Vorteil, wenn der Kopf dieser Halteschraube 94 unterhalb der Ebene von Ringnut 96 endet, so daß ein Abtrennen des Mehrkantes 92 ohne Behinderung durch die Schraube 94 möglich ist.

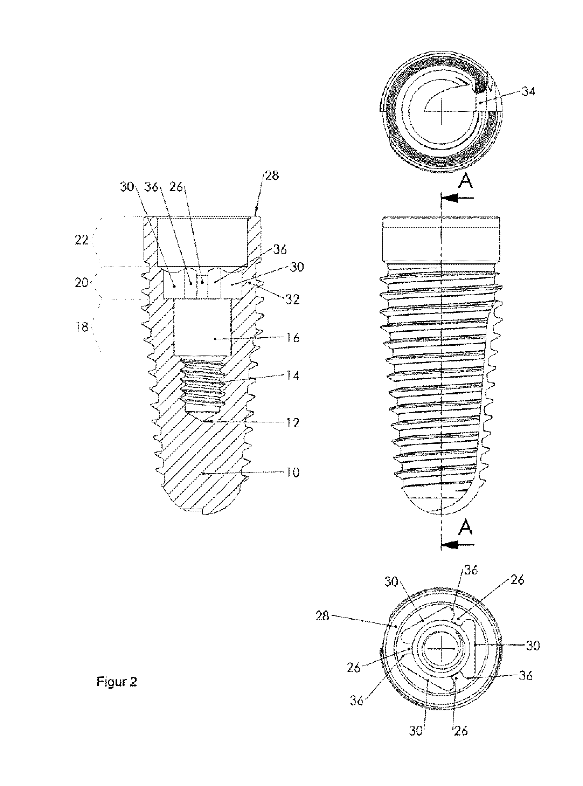

Wie in Fig. 2 gezeigt, ist der Grundkörper 10 an seinem in Fig. 1 unten gezeigten apikalen Ende geschlossen ausgebildet und weist eine zu seinem in Fig. 1 oben liegenden koronalen Ende hin offene Blindbohrung 12 mit einem Innengewinde 14 am apikalen Ende der Blindbohrung 12 auf. In das Innengewinde ist eine in Fig. 2 zeichnerisch nicht dargestellte Halteschraube 60 für die Eindrehbasis 40 oder ein Abutment 140 einschraubbar. An das Innengewinde 14 des Grundkörpers 10 schließt in koronaler Richtung eine hohlzylindrische Ringausnehmung 16 mit gegenüber dem Innengewinde 14 vergrößerten Innendurchmesser an. Die Ringausnehmung 16 weist in der dargestellten Form drei Bereiche 18; 20; 22 auf. So weist die Ringausnehmung 16 gemäß Figur 2 einen an das Innengewinde 14 koronal anschließenden Führungsabschnitt 18 auf. An den Führungsabschnitt 18 der Ringausnehmung 16 schließt sich in koronaler Richtung ein Formschlussabschnitt 20 an, der einen gegenüber dem Führungsabschnitt 18 vergrößerten Innendurchmesser hat und eine zumindest abschnittsweise konische Innenwandung mit - in der Ausführungsform gemäß Figur 2 - drei radial nach innen gerichteten Federstegen 26 aufweisen kann. Die Federstege 26 sind zu den Formschlussnuten 142 an dem in Figur 8 gezeigten Abutment 140 nach Art einer Nut-Feder-Verbindung korrespondierend ausgebildet und können vorzugsweise derart bemessen sein, dass sie sich über die gesamte axiale Länge des Formschlussabschnittes 20 erstrecken. Die Federstege 26 können durch maschinelle mechanische oder elektrochemische Bearbeitung aus dem Grundkörper ausgebildet sein.

In dem Formschlussabschnitt 20 ist gemäß Fig. 2 bevorzugt zwischen je zwei Federstegen 26 je eine Innenkantfläche 30 als Eindrehelement vorgesehen, an dem jeweils eine korrespondierende, formkomplementäre Außenkantfläche 48 an der in Fig. 3 gezeigten Eindrehbasis 40 als Eindrehelement während des Eindrehvorganges des Grundkörpers 10 in den Kiefer angreifen kann. Zusätzlich kann ein als Außenmehrkantfläche gestaltetes Eindrehelement, an der Eindrehbasis oder auch dem Eindrehkopf, jeweils so ausgebildet sein, daß die Planfläche der Außenkantfläche, die auch radial vorspringend ausgebildet sein kann, zumindest in Eindrehrichtung mit einer Seitenfläche 49/89, beispielsweise in Form eines seitlichen Vorsprungs, wie einem in Form eines zur Längsachse koaxialen Halbzylinders, versehen sein kann, die beim Eindrehen des Grundkörpers in den Kiefer an der korrespondierenden Stegseitenfläche 36/57, nicht jedoch an der Stegspitze zur Anlage kommen kann und so die Übertragung des Drehmomentes auf den Grundkörper unterstützt, ohne daß die Stegspitze beim Eindrehen beschädigt werden kann. Eine solche Seitenfläche/Vorsprung kann bei jedem bei dem erfindungsgemäßen Insertionsset verwendeten Eindrehelement vorhanden sein, um die Übertragung des Drehmomentes in Drehrichtung zu unterstützen, wenn zwischen je zwei Eindrehelementen radiale Federstege oder Vorsprünge angeordnet sind.

Aus mechanischen und geometrischen Gründen ist die Verwendung von drei Eindrehelementen wie beispielsweise Innenkantflächen am Grundkörper 10 vorteilhaft, es können jedoch auch vier bis sechs Eindrehelemente wie Innenkantflächen vorgesehen sein, an denen korrespondierende Außenkantflächen 48 der Eindrehbasis als Eindrehelemente eingreifen, solange beim Einsetzen der Eindrehbasis 40 die Formschlusselemente an Grundkörper 10 und Eindrehbasis 40 zuverlässig in Eingriff gebracht werden können. Zwischen den Innenkantflächen können bei den Ausführungsformen gemäß der Erfindung jeweils Vorsprünge wie Federstege 26 in entsprechender Anzahl vorgesehen sein, wobei die Federstege und Innenkantflächen sich aus Gründen einer verbesserten Kraftübertragung axial über die gesamte axiale Länge des Formschlussabschnittes erstrecken können und über die formkomplementäre Außenkantflächen der Eindrehbasis die Drehmomentübertragung ermöglichen.

Die in Fig. 3 gezeigte Eindrehbasis weist koronal einen Auflagebund 54, daran apikal anschließend einen Endabschnitt 52, der eine nicht dargestellte umlaufende Nut für die Aufnahme eines Dichtmittels wie eines nicht dargestellten O-Rings im Endabschnitt 52 aufweisen kann, einen Formschlussabschnitt 46 und einen Führungsabschnitt 44 auf. Im Formschlussabschnitt 46 sind eine Anzahl von Eindrehelementen jeweils in Form von Außenmehrkantflächen 48 mit Seitenflächen 49 und von axial verlaufenden Aussparungen 50 vorgesehen, die jeweils in ihrer Form, Anordnung und in ihrer Anzahl jeweils den Eindrehelementen und den Federstegen 26 im Formschlussabschnitt 20 des Grundkörpers 10 korrespondieren. Bei der im Grundkörper eingesetzten Eindrehbasis 40 sind die Aussparungen 50 zu den Federstegen 26 im Grundkörper 10 vorzugsweise mittig mit Spiel angeordnet und bevorzugt nicht in Kontakt, um eine Beschädigung der Federstege 26 zu vermeiden, während die Eindrehelemente 30 am Grundkörper 10 form- und/oder kraftschlüssig mit den Eindrehelementen 48 mit Seitenflächen 49 an der Eindrehbasis 40 in Eingriff sind, um eine Drehmomentübertragung zu ermöglichen.

Beim Einsetzen der Eindrehbasis 40, die mit einer axialen Längsbohrung 42 versehen ist, deren Innendurchmesser etwa dem Außendurchmesser der in Fig. 2 nicht gezeigten Halteschraube [60 in Fig. 4] entspricht, in den Grundkörper 10 greift der Führungsabschnitt 44 in den Führungsabschnitt 18 der Ringausnehmung 16 ein, wobei die Zylindermantelfläche des Führungsabschnittes 44 an der Innenzylindermantelfläche des Führungsabschnittes 18 des Grundkörpers 10 zur Anlage kommt.

Der Endabschnitt 52 der Eindrehbasis 40 ist bei eingesetzter Eindrehbasis in dem Endabschnitt 22 des Grundkörpers 10 angeordnet. Die Federstege 26 sind in den Aussparungen 50 positioniert, während der Auflagebund 54 am Stirnrand 28 zur Anlage kommen kann. Damit ist die Eindrehbasis 40 dicht und über die Eindrehelementepaare [30; 48] formschlüssig zu dem Grundkörper 10 festgelegt.

Mittels der die Eindrehbasis 40 durchsetzenden in Fig. 4 gezeigten Halteschraube 60, die in das Innengewinde 14 des Grundkörpers 10 einschraubbar ist, lässt sich die Eindrehbasis drehfest mit dem Grundkörper 10 verbinden. Um das Entfernen der Eindrehbasis 40 aus dem Grundkörper 10 zu erleichtern, beispielsweise, wenn das Abutment 140 eingesetzt werden soll, kann in der die Eindrehbasis 40 durchsetzenden Bohrung 42 ein Innengewinde vorgesehen sein, in das nach Entfernen der Halteschraube ein nicht dargestellter Abdrückpfosten mit Außengewinde einschraubbar ist, der sich mit seinem apikalen Ende am Innengewinde 14 des Grundkörpers abstützt. Beim Einschrauben des Abdrückpfostens wird die Eindrehbasis 40 dann aus dem Grundkörper 10 koronal angehoben und kann entnommen werden.

Im koronalen Endabschnitt am Auflagebund 54 weist die Eindrehbasis 40 innenseitig Eindrehelement 56 auf, die als Innenmehrkantflächen 56 ausgestaltet sein können und mit Außenmehrkantflächen 88 im Formschlussabschnitt 86 am Eindrehkopf 80 eine Formschlussverbindung ausbilden können. So kann die Übertragung des Drehmomentes vom Winkelstück über den Halteschaft 100 und den Eindrehkopf 80 auf die Eindrehbasis 40 und den Grundkörper 10 erfolgen und das Eindrehen des Insertionssets in den Kiefer ermöglichen. Auch hier ist aus mechanischen und konstruktiven Gründen die Verwendung von drei Innenkantflächen 56 an der Eindrehbasis 40 vorteilhaft, es können jedoch auch vier bis sechs Innenkantflächen vorgesehen sein, an denen korrespondierende formkomplementäre Außenkantflächen 92 des Eindrehkopfes 80 als Eindrehelemente eingreifen, solange die Eindrehelemente [56; 88] an der Eindrehbasis 40 und Eindrehkopf 80 zuverlässig in Eingriff gebracht werden können.

Wie in Figur 4 gezeigt, weist die Halteschraube 60 ein apikal angeordnetes Gewinde 62, einen Mittelabschnitt und einen Schraubenkopf 66, der einen apikalen unteren Abschnitt 68 mit Konusbund 64 und einen koronalen oberen Abschnitt 70 hat, auf. Der untere Abschnitt 68 hat gegenüber dem oberen Abschnitt 70 einen größeren radialen Durchmesser und presst beim Einschrauben der Halteschraube 60 mittels des Konusbundes 64 über den konischen Abschnitt 58 die Eindrehbasis 40 gegen den Grundkörper 10. Zwischen dem oberen Abschnitt 70 und dem Eindrehbasis 40 kann radial so eine zylindrische Nut zwischen Schraubenkopf 66 und Eindrehbasis ausgebildet sein, in die ein rohrzylindrischer Abschnitt 84 des Eindrehkopfes 80 eingreifen und so eine Führung des Eindrehkopfes 80 in der Eindrehbasis 40 ermöglichen kann. Im rohrzylindrischen Abschnitt 84 des Eindrehkopfes können Rastelemente vorgesehen sein, die mit entsprechend korrespondierenden Rastelementen an der Eindrehbasis 40 und/oder am Schraubenkopf 66 der Halteschraube 60 eine Sicherung des Eindrehkopfes auf der Eindrehbasis 40 bereits ohne Halteschaft 100 oder zweiter Halteschraube ermöglichen. Im Schraubenkopf 66 ist ein Innensechskantabschnitt (Inbus) vorgesehen, der zusätzlich mit einem Innengewinde versehen ist. Mittels eines Inbusschlüssels kann die Halteschraube 60 aus dem Grundkörper 10 geschraubt werden, um die Entfernung der Eindrehbasis 40 zu ermöglichen und ein Abutment 140 in die Ringausnehmung 16 des Grundkörpers einsetzen zu können. In das Innengewinde im Innensechskantabschnitt des Schraubenkopfes 66 ist das Außengewinde 102 des Halteschaftes 100 oder einer zweiten Halteschraube einschraubbar, und so kann der Eindrehkopf 80 auf der Eindrehbasis 40 fixiert werden.

Gemäß Figur 5 weist der Eindrehkopf 80 am apikalen Ende die Stirnfläche 90 auf, die in der Einbauposition an der Stirnfläche am Auflagebund 54 der Eindrehbasis 40 aufliegt. In der Einbauposition greift der rohrzylindrische Abschnitt 84 zwischen Schraubenkopf 66 und koronalem Auflagebund 54 der Eindrehbasis 40 ein, und die als Außenmehrkantflächen 88 im Formschlussabschnitt 86 ausgebildeten Eindrehelemente bilden mit den als Innenmehrkantflächen 56 an der Eindrehbasis 40 ausgebildeten Eindrehelementen eine Formschluss/Kraftschlussverbindung aus. So kann die Übertragung des Drehmomentes vom Winkelstück über den Halteschaft 100 und über den Mehrkant 92 wie einen Sechskant am Eindrehkopf 80 auf die Eindrehbasis 40 und so den Grundkörper 10 erfolgen. Dabei kann der Mehrkant 92 von einem am Eindrehwerkzeug vorgesehenen - nicht in den Figuren dargestellten - Innenmehrkant nach Art einer Steckschlüsselnuss umfasst sein und so die Kraftübertragung vom Werkzeug auf den Eindrehkopf 80 ermöglichen.

Bei der Kraftübertragung von Eindrehkopf 80 auf Eindrehbasis 40 ist aus mechanischen und geometrischen Gründen die Verwendung von drei Eindrehelementpaaren (56;88) vorteilhaft, es können jedoch auch vier bis sechs Eindrehelementpaare vorgesehen sein, bei denen jeweils korrespondierende Außenkantflächen 88 des Eindrehkopfes 80 als Eindrehelemente an Innenmehrkantflächen 56 der Eindrehbasis eingreifen. Anstelle der Mehrkantverbindung können auch andere Formschlussverbindungen, beispielsweise durch Ausbildung von Nocken/axialen Vorsprüngen an einem Bauteil und korrespondierenden Vertiefungen am anderen Bauteil, ausgebildet sein.

Fig. 6 zeigt in der Draufsicht den Halteschaft 100 mit apikalem Gewindeabschnitt 102, Bundkragen 104 im Mittelabschnitt des Halteschaftes 100 sowie Ansatz 106 für ein Winkelstück und Werkzeugansatz 108. Der Halteschaft 100 kann beispielhaft so ausgestaltet sein, dass mittels des im Mittelabschnitt des Halteschaftes 100 vorgesehenen Bundkragens 104, der am Endabschnitt des Eindrehkopfes 80 anliegt, der Eindrehkopf 80 gegen die Eindrehbasis 40 oder der einteilige Eindrehkörper 98 gegen den Grundkörper 10 kraft- und/oder formschlüssig gehalten wird und der Eindrehkopf 80 mit der Eindrehbasis 40 im Bereich der Stirnfläche 90 und des Auflagebundes 54 oder der einteilige Eindrehkörper 98 mit dem Grundkörper 10 eine Formschluss- und/oder Kraftschlussverbindung ausbildet.

Der Halteschaft 100 kann auch, wie in Fig. 1b gezeigt, in einer zweiteiligen Form ausgebildet sein, wobei der untere Abschnitt in Form einer zweiten Halteschraube 94 ausgebildet sein kann, die, in die Halteschraube 60 eingeschraubt den Eindrehkopf 80 mit dem Bundkragen 104 gegen die Eindrehbasis festlegt.

Fig. 7 zeigt eine Verschlussschraube 120 mit Gewinde 122 und Innensechskant 124 zum Ansatz einen Inbus-Schlüssels, mit dem die Verschlussschraube 120 in das Gewinde im Innensechskant 72 der Halteschraube 60 eingeschraubt werden kann. Mittels der Verschlussschraube kann die Eindrehbasis 40 verschlossen werden, wenn eine zweiphasige Einheilung seitens des Implantologen vorgesehen ist und das sich bildende Gewebe über den Grundkörper wächst.

So umfasst das erfindungsgemäße Insertionsset in einer Ausführung den Grundkörper 10, die Eindrehbasis 40 mit darin festgelegter Halteschraube 60, den auf der Eindrehbasis aufsitzenden Eindrehkopf 80 sowie den Halteschaft 100, der den Eindrehkopf 80 durchdringt und in der Halteschraube 60 in der Eindrehbasis 40 direkt oder über eine zweite Halteschraube festgelegt ist.

Das in Fig. 8 beispielhaft gezeigte Abutment 140 dient über den Befestigungskopf 152 zur Befestigung für einen nicht gezeigten festsitzenden Zahnersatz. Der Befestigungskopf 152 ist dabei auf die am Implantationsort im Kiefer gegebene individuelle räumliche Situation anpassbar und kann konisch, geneigt und/oder konvex geformt sein. In Gebrauchsposition unterhalb des an den Stirnrand 28 des Grundkörpers 10 aufsetzbaren Dichtkragen 150 weist das Abutment 140 in apikaler Richtung einen Endabschnitt 148, der eine nicht dargestellte umlaufende Nut für die Aufnahme eines Dichtmittels wie eines nicht dargestellten O-Rings im Endabschnitt 148 aufweisen kann, dazu apikal einen Formschlussabschnitt 146 und einen Führungsabschnitt 144 auf. Im Formschlussabschnitt 146 sind eine Anzahl von axial verlaufenden Nuten 142 vorgesehen, die in ihrer Form und Anordnung, aber nicht notwendigerweise in ihrer Anzahl, den Federstegen 26 im Formschlussabschnitt 20 des Grundkörpers 10 entsprechen. Im eingesetzten Zustand sind die Formschlussnuten 142 mit den Federstegen 26 in Eingriff, während die Eindrehelemente 30 am Grundkörper 10 bevorzugt ohne Kontakt zum Abutment 140 sind.

Beim Einsetzen des Abutments 140, das mit einer axialen Längsbohrung versehen ist, deren Innendurchmesser etwa dem Außendurchmesser der in Fig. 2 nicht gezeigten Halteschraube [60 in Fig. 4] entspricht, in den Grundkörper 10 greift der Führungsabschnitt 144 in den Führungsabschnitt 18 der Ringausnehmung 16 des Grundkörpers 10 ein, wobei die Zylindermantelfläche des Führungsabschnittes 144 an der Innenzylindermantelfläche des Führungsabschnittes 18 des Grundkörpers 10 zur Anlage kommt.

Der Endabschnitt 148 des Abutments 140 kann mit Paßsitz in dem Endabschnitt 22 des Grundkörpers 10 angeordnet sein. Die Federstege 26 greifen in die Formschlussnuten 142 ein, während der Dichtkragen 150 am Stirnrand 28 zur Anlage kommt. Damit ist das Abutment 140 dicht und formschlüssig verdrehgesichert zu dem Grundkörper 10 festgelegt.

Mittels einer das Abutment 140 durchsetzenden Halteschraube, die der Halteschraube 60 entsprechen kann und die in das Innengewinde 14 des Grundkörpers 10 einschraubbar ist, lässt sich das Abutment 140 drehfest mit dem Grundkörper 10 verbinden. Um das Entfernen des Abutments 140 aus dem Grundkörper 10 zu erleichtern, kann in der das Abutment durchsetzenden Bohrung ein in Fig. 8 nicht dargestelltes Innengewinde vorgesehen sein, in das nach Entfernen der Halteschraube ein nicht dargestellter Abdrückpfosten mit Außengewinde einschraubbar ist, der sich mit seinem apikalen Ende am Innengewinde 14 des Grundkörpers abstützt. Beim Einschrauben des Abdrückpfostens wird das Abutment 140 dann aus dem Grundkörper 10 koronal angehoben und kann entnommen werden.

### Bezugszeichenliste

- 10: Grundkörper
- 12: Bohrung
- 14: Innengewinde
- 16: Ringausnehmung
- 18: Führungsabschnitt
- 20: Formschlussabschnitt
- 22: Endabschnitt
- 26: Federsteg
- 28: Stirnrand
- 30: Eindrehelement/Aussparung/Innenmehrkant
- 32: Wandung
- 34: Spannut
- 36: Stegseitenfläche

- 40: Eindrehbasis
- 42: Bohrung mit Innengewindeabschnitt
- 44: Führungsabschnitt
- 46: Formschlussabschnitt
- 48: Eindrehelement/Außenmehrkantfläche
- 49: Übergangsfläche/Vorsprung
- 50: Nut/Aussparung
- 52: Endabschnitt
- 54: Auflagebund
- 56: Eindrehelement/Innenkantfläche
- 57: Stegseitenfläche
- 58: Konischer Abschnitt (Innen)

- 60: Halteschraube
- 62: Außengewinde
- 64: Konusbund
- 66: Schraubenkopf
- 68: Unterer Abschnitt
- 70: Oberer Endabschnitt
- 72: Innensechskant mit Innengewinde

- 80: Eindrehkopf
- 82: Bohrung
- 84: Führungsabschnitt
- 86: Formschlussabschnitt
- 88: Eindrehelement/Außenmehrkantfläche
- 89: Übergangsfläche/Vorsprung
- 90: Stirnfläche
- 91: Nut/Aussparung
- 92: Außenmehrkant wie z.B. ein Sechskant
- 94: Zweite Halteschraube
- 96: Ringnut
- 98: Eindrehkörper

- 100: Halteschaft
- 102: Außengewinde
- 104: Bundkragen
- 106: Winkelstückansatz
- 108: Werkzeugansatz

- 120: Verschlussschraube
- 122: Gewinde
- 124: Innensechskant

- 140: Abutment
- 142: Formschlussnut
- 144: Führungsabschnitt
- 146: Formschlussabschnitt
- 148: Endabschnitt
- 150: Dichtkragen
- 152: Befestigungskopf

## Patentansprüche

1. Insertionsset für ein enossales Einzelzahnimplantat für einen festsitzenden Zahnersatz, mit
- einem im Wesentlichen zylindrischen, in eine in einen Kieferknochen eingebrachte Bohrung einsetzbaren Grundkörper (10) mit einer Ringausnehmung (16) und mit einer koaxial zur Ringausnehmung (16) angeordneten Bohrung (12), die apikal ein Gewinde (14) zur Festlegung einer Halteschraube aufweist;
- einer in die Ringausnehmung (16) des Grundkörpers (10) einsetzbaren Eindrehbasis (40), die eine die Eindrehbasis (40) koaxial zur Ringausnehmung (16) durchdringende Bohrung (42) zur Aufnahme einer Halteschraube (60) aufweist;
- eine Halteschraube (60) mit einem apikalen Außengewinde (62) und einem koronalen Schraubenkopf (66), wobei die Halteschraube (60) in die Bohrung (42) der Eindrehbasis einsetzbar und in das Gewinde (14) des Grundkörpers (10) einschraubbar ist;
- einem Eindrehkopf (80), der mit der Eindrehbasis (40) in Eingriff bringbar ist und der eine koaxial zur Ringausnehmung (16) angeordnete Bohrung (82) aufweist, und
- einem Halteschaft (100), der in die Bohrung (82) des Eindrehkopfes (80) einsetzbar einenends an der Halteschraube (60) festlegbar ist und anderenends einen Ansatz für ein Winkelstück eines Dentalantriebs aufweist.

2. Insertionsset für ein enossales Einzelzahnimplantat für einen festsitzenden Zahnersatz nach Anspruch 1, wobei die Ringausnehmung (16) des Grundkörpers (10) einen apikalen Führungsabschnitt (18), einen Formschlussabschnitt (20) und einen koronalen Endabschnitt (22) umfasst und wobei die Eindrehbasis (40) einen apikalen Führungsabschnitt (44), einen Formschlussabschnitt (46) und einen koronalen Endabschnitt (52), die mit den Abschnitten des Grundkörpers korrespondieren, umfasst.

3. Insertionsset für ein enossales Einzelzahnimplantat für einen festsitzenden Zahnersatz nach Anspruch 2, wobei der Formschlussabschnitt (20) des Grundkörpers (10) und der Formschlussabschnitt (46) der Eindrehbasis (40) zueinander komplementäre Eindrehelemente, die beim Einsetzen der Eindrehbasis (40) in den Grundkörper miteinander in Eingriff gebracht werden, aufweisen und wobei die Eindrehbasis (40) und der Grundkörper (10) in Eingriffsposition der zueinander komplementären Eindrehelemente zueinander drehfest festgelegt sind.

4. Insertionsset für ein enossales Einzelzahnimplantat für einen festsitzenden Zahnersatz nach einem der Ansprüche 1 bis 3, wobei die Eindrehbasis (40) am koronalen Ende einen Formschlussabschnitt mit Eindrehelementen (56) aufweist, die mit Eindrehelementen (88) des Eindrehkopfes (80) miteinander in Eingriff gebracht werden können, und die Eindrehbasis (40) und der Eindrehkopf (80) in Eingriffsposition der zueinander komplementären Eindrehelemente drehfest festgelegt sind.

5. Insertionsset für ein enossales Einzelzahnimplantat für einen festsitzenden Zahnersatz nach einem der Ansprüche 1 bis 3, wobei die Eindrehbasis (40) und der Eindrehkopf (80) als einstückiger Eindrehkörper (98) ausgebildet sind.

6. Insertionsset für ein enossales Einzelzahnimplantat für einen festsitzenden Zahnersatz nach einem der Ansprüche 1 bis 5, wobei der Schraubenkopf (66) der Halteschraube (60) einen Innenmehrkant und bevorzugt ein im Innenmehrkant angeordnetes Innengewinde (72) aufweist.

7. Insertionsset für ein enossales Einzelzahnimplantat für einen festsitzenden Zahnersatz nach einem der Ansprüche 1 bis 6, wobei der Schraubenkopf (66) der Halteschraube (60) in der Gebrauchsposition in der Eindrehbasis (40) versenkt ist.

8. Insertionsset für ein enossales Einzelzahnimplantat für einen festsitzenden Zahnersatz nach einem der Ansprüche 1 bis 5, wobei die Halteschraube (60) und der Halteschaft (100) einstückig ausgebildet sind.

9. Insertionsset für ein enossales Einzelzahnimplantat für einen festsitzenden Zahnersatz nach einem der Ansprüche 1 bis 7, wobei der Halteschaft (100) zweistückig ausgebildet ist.

10. Insertionsset für ein enossales Einzelzahnimplantat für einen festsitzenden Zahnersatz nach einem der Ansprüche 1 bis 9, wobei der Halteschaft (100) so ausgebildet ist, dass der Halteschaft (100) in Gebrauchsposition Grundkörper (10), Eindrehbasis (40) und Eindrehkopf (80) in Eingriff hält.

11. Insertionsset für ein enossales Einzelzahnimplantat für einen festsitzenden Zahnersatz nach einem der Ansprüche 1 bis 10, wobei die einander korrespondierenden Eindrehelemente an Grundkörper (10), Eindrehbasis (40) und Eindrehkopf (80) als jeweils formkomplementäre Eindrehelementpaare, ausgewählt aus Paaren von Innenkant-Außenkant, Nocken-Ausbuchtungen und Morsekegel-Morsekonus, ausgebildet sind.

12. Insertionsset für ein enossales Einzelzahnimplantat für einen festsitzenden Zahnersatz nach einem der vorhergehenden Ansprüche, wobei im Formschlussabschnitt des Grundkörpers zumindest ein Formschlusselement angeordnet, das mit einem formkomplementären Formschlusselement an einem Abutment in Eingriff bringbar ist und zu den Eindrehelementen unterschiedlich ist.

13. Insertionsset für ein enossales Einzelzahnimplantat für einen festsitzenden Zahnersatz nach Anspruch 12, wobei außenseitig an zumindest einem von Grundkörper, Eindrehbasis, Eindrehkopf und Eindrehkörper mindestens eine Indexmarkierung vorhanden ist, die die Position des zumindest einen Formschlusselementes, das mit einem formkomplementären Formschlusselement an einem Abutment in Eingriff bringbar ist und zu den Eindrehelementen unterschiedlich ist, anzeigt.

14. Insertionsset für ein enossales Einzelzahnimplantat für einen festsitzenden Zahnersatz nach einem der vorhergehenden Ansprüche, wobei außenseitig an Eindrehkopf oder Eindrehkörper mindestens eine Scanbodymarkierung vorhanden ist,
